# EUROPÄISCHE PATENTSCHRIFT

(11) **EP 0 988 915 B1**
(45) Veröffentlichungstag und Bekanntmachung des Hinweises auf die Patenterteilung: **11.08.2004**
(21) Anmeldenummer: 99116878.2
(22) Anmeldetag: 06.09.1999
(51) Int. Cl.: B23K 20/04, E04D 5/10, B32B 15/08, E04D 13/14

(54) **Formkörper, wie Platte, Blech oder Folie**
Shaped body like plate, sheet or foil
Objet façonné comme plaque, tôle ou feuille

(30) Priorität: 18.09.1998 DE 29816718 U; 24.08.1999 DE 29914796 U
(43) Veröffentlichungstag der Anmeldung: 29.03.2000
(60) Teilanmeldung: 03022422.4
(73) Patentinhaber: JL Goslar GmbH, 38640 Goslar (DE)
(72) Erfinder: Ernst, Johannes, 22339 Hamburg (DE)
(74) Vertreter: Richter, Werdermann, Gerbaulet & Hofmann

(56) Entgegenhaltungen:
- EP-A- 0 424 312
- EP-A- 0 856 398
- DE-A- 2 362 711
- DE-A- 3 019 187
- DE-U- 29 520 170
- GB-A- 2 184 685
- US-A- 5 142 837

## Beschreibung

Gegenstand der Erfindung ist ein Formkörper, wie Platte, Blech oder Folie.

Blei- und Kupferbleche sind besonders im Bauwesen viel verwandte Halbzeuge. So werden Bleibleche aufgrund ihrer leichten Verarbeitbarkeit für Abdeckung vielerlei Art, wie z.B. Dach- und Ablaufeinfassungen, verwandt. Der guten Beständigkeit des Bleies gegen sehr viele Chemikalien steht aber seine Unbeständigkeit gegen frischen Mörtel entgegen, so dass

Blei bei direkter Berührungsgefahr mit diesem stets einer besonders sorgfältigen Isolierung bedarf. Kupfer dagegen ist beständig gegen Alkalien und damit auch gegen Mörtel und Zement. Da außerdem die Oberfläche von Kupferblechen durch Witterungseinflüsse oxidiert und mit einer das ästhetische Gefühl ansprechenden Partina überzogen wird, werden Kupferbleche für komplette Dacheinfassungen verwandt. Der Nachteil der gegenüber Blei schwierigen Verarbeitbarkeit musste dabei bisher hingenommen werden.

Es ist bekannt, um die Eigenschaften des Grundmetalls mit den Eigenschaften des Deckmetalls zu vereinigen, Verbundmetalle zu verwenden, was jedoch vorwiegend der Einsparung teurer NE-Metalle dient. Auch in der chemischen Industrie ist es bekannt, in jenen Fällen, bei denen die von Apparaten aus Bleiblech zu erreichende Festigkeit nicht ausreicht, die betreffenden Apparate aus einem den Festigkeitsanforderungen genügenden Grundwerkstoff herzustellen und danach mit Walzblei auszukleiden. Bei verzinnbaren Grundwerkstoffen erfolgt die Befestigung des Walzbleis durch Verlöten der einzelnen Stellen mit der Metallunterlage. Ferner sind zur Verbindung metallischer oder nichtmetallischer Werkstoffe Klebstoffe ebenso bekannt, wie das Überziehen der miteinander zu verlötenden Gegenstände vor dem Verbinden mit Lötlegierungen.

Für ein Massenprodukt, wie z.B. Walzblei, welches auf Dächern und insbesondere bei der Herstellung von Dachfenstern verwendet wird, ist jedoch einer Auflage von 1 % Zinn / Seite wegen des mehrfach höheren Zinn- als Bleipreises eine Verteuerung, die auf dem Markt nicht hingenommen wird. Eine Zinnauflage von 1 % pro Blei / Seite führt zu einer kaum akzeptablen Kostenerhöhung.

Die gattungsbildende DE-A-2 362 711 offenbart ein Blech aus einem metallischen Material, wobei das Verbundmaterial auf seinen beiden Seiten mit einer durchgehenden Strukturierung versehen ist, um ein großflächiges Design zu halten. Hierzu wird ein Verfahren angegeben, nach dem eine mit positiver und eine mit entsprechender negativen Oberflächenstruktur versehene gleichlaufende harte Walze schrittweise bei Parallellage der positiven und negativen Strukturebene der einzelnen über den Umfang der Walzen verteilten großflächigen Struktureinheiten mit einem bis zu dieser Parallellage auf ein für die Verformung notwendigen Maximum aufgebauten Druck gegeneinander gedrückt werden.

Aus der DE-A-598 940 ist es bekannt, zur Herstellung von metallischen Formkörpem Platten, Bleche, Bänder, Folien oder Blätter gleicher oder unterschiedlicher Metallsorten zu Paketen oder Rollen zusammenzufügen und als dann einer gegebenenfalls unter Anwendung von Hitze erfolgenden, eine innige Bindung der einzelnen Lagen miteinander auslösenden, plastischen Verformung zu unterwerfen. Um eine innige Bindung im Sinne einer Art Verschweißung mit dem Lagenmetall zu erreichen, sieht dieses Verfahren vor, dass zwischen die Metallagen metallische oder nichtmetallische Stoffe, die beispielsweise Grafit, eingebracht werden, die bei der plastischen Verformung zertrümmert werden und unter der Wirkung von Hitze und/oder Druck eine innige Bindung im Sinne einer Art Verschweißung mit dem Lagenmetall erfahren, wobei auch zwischen die metallischen Lagen pulverförmige Stoffe eingebracht werden können, die bei der plastischen Verformung mit dem Lagenmetall innig verbunden, also gewissermaßen verschweißt, werden. Auch das Einbringen von Flüssigkeiten oder Aufschwemmungen von festen Stoffen gegebenenfalls in Folienform zwischen die Metallagen ist bei diesem Verfahren vorgesehen. Diese Zwischenlagen hinterlassen beim Erhitzen feste Rückstände, die bei der plastischen Verformung eine innige Verbindung nach Art der Verschweißung mit den Metallagen eingehen. Auch ohne Verwendung von Zwischenlagen aus metallischen oder nichtmetallischen, pulverförmigen oder flüssigen Stoffen, gegebenenfalls in Folienform, ist es möglich, innige Verbindungen der verschiedenen Metallagen dadurch zu erreichen, dass Metallfolien oder -bänder bzw. dünne Platten oder Bleche als Ausgangsstoff paketiert oder zu Rollen zusammengewickelt werden, woraufhin dann anschließend diese Pakete oder Rollen in der Strang- oder Walzenpresse zu Folien oder dünnen Platten oder auch zu sonstigen Formkörpern umgewandelt werden, so dass es beispielsweise möglich ist, zahlreiche Aluminiumfolien vorgegebener Stärke aufeinander zu legen und dieses Paket zu einer Folie von wiederum nur einer Stärke auszuwalzen, die der Stärke einer einzigen Aluminiumfolie entspricht.

Durch das ständige Verdrängen der Metallteilchen während des Walzprozesses tritt eine Metallverfestigung ein, so dass die einzelnen Metallagen eine innige Verbindung untereinander eingehen.

Dieses bekannte Verfahren befasst sich jedoch nicht mit der Herstellung eines Massenproduktes unter Verwendung von Bleiblechen, welches auf Dächern und insbesondere bei der Herstellung von Dachfenstern oder Schomsteinverkleidungen verwendet wird, um eine kostensparende Bleiblechabdeckung zu erzielen, ohne dass dabei jedoch die Eigenschaften, wie Oberflächenbrillanz und gute Haftfestigkeit, beeinträchtigt werden.

Durch die DE-A-27 37 151 ist ein zinnplattiertes Bleiblech, aus zu Folien oder dünne Platten strang- oder walzgepressten, durch plastische Verformung innig miteinander verbundenen Blechen, Platten oder Folien aus unterschiedlichen Metallsorten und dessen Verwendung zur Herstellung von Rohrleitungen und Abdeckungen im Bauwesen, insbesondere für Dachabdeckungen und Dachfenstern, bekannt. Dieses zinnplattiertes Bleiblech besteht aus einem ein- oder beidseitig mit einem Plattierungsprodukt aus einer einseitig mit einer Plattierung aus 0,5 bis 10 % Zinn oder hochzinnhaltigen Legierung versehenen und auf Plattierungsstärke herabgewalzten Bleiplatte Blei-Auf-Bleiseite plattierten platten- oder folienförmigen Bleigrundmaterial. Mit einem derartigen zinnplattierten Bleiblech soll dem Blei eine verbesserte Oberfläche mit höherer Brillanz und bessere Haftfestigkeit gegeben werden, um es als Folien ausgewalzt besser bestreichen, bekleben, färben und verarbeiten zu können.

Bei gefärbten oder mit Kleber beschichteten Walzblei ist eine vorhandene Zinnschicht in der Grenzfläche Blei/Substrat von entscheidener Bedeutung für die Langlebensdauereigenschaften hinsichtlich der Haltbarkeit der Lack- bzw. Kleberschicht. Das Fehlen einer Zinnschicht macht sich jedoch unter dem Einfluss von Luft und/oder Feuchtigkeit erst nach Wochen, ab etwa 12 Wochen, dahingehend bemerkbar, dass sich die Lack- oder Kleberschicht mechanisch leicht abheben lässt. Andererseits hat es sich auch gezeigt, dass dickere Bleibleche, ab 0,6 bis maximal üblichen Stärken von 3 mm (aus reinem Blei, Bleiinhalt > 99,9 %) bei starker mechanischer Verformung, z.B. plissieren, zu einer Grobkornbildung neigen. Dies hat zur Folge, dass das verformte an zahllosen Stellen in der Oberfläche entlang der Korngrenze des Bleies aufreißt. Auch hat es sich gezeigt, dass bei den bekannten zinnplattierten Bleiblechen bei starken Verformungen des Bleiblechs zwischenkristalline Brüche infolge Grobkornbildung auftreten mit der Folge, dass bei diesen zwischenkristallinen Brüchen die als primär benutzte, in der Regel sehr dünne Zinnschicht oder Zinnlegierung mit der Folge aufreißt, dass eine auf dieser Zinnschicht bzw. Zinnlegierung aufgebrachte Lack- oder Kleberschicht nicht homogen mit dem Grundmaterial Blei verbunden ist, so dass die Langlebensdauereigenschaften der Lack- bzw. Kleberbindung auf der mit Zinn plattierten Bleiblechoberfläche sich verringern und es zu Abhebungen der Lack- bzw. der Kleberschicht kommt.

Durch die EP-A-0 856 398 ist ein zinnplattiertes Bleiblech bekannt, bei dem zinnplattiertes bleihaltiges platten- oder folienförmiges Grundmaterial aus zu Folien oder dünnen Platten strang- oder walzgepressten, durch plastische Verformung innig miteinander verbundenen Blechen, Platten oder Folien zur Verhinderung zwischenkristalliner Brüche bei einer Bleiblechverformung des Bleigrundmaterials mit einer ein- oder beidseitig aufgebrachten Zinnplattierungsschicht aus einer zinnhaltigen Legierung mit der Zusammensetzung besteht:

| | |
|---|---|
| Sn | 0,15 bis 0,85% |
| Sb | 0,05 bis 0.15% |
| Cu | 0,03 bis 0,06% |
| Bi | 0,01 bis 0,10% |
| Sonstige Beimengungen: max. | 0,10% |
| Pb | Rest, |

wobei die Außenseite der Zinnplattierungsschicht mit einer Lack- oder Kleberschicht versehen ist.

Es ist Aufgabe der vorliegenden Erfindung, einen Formkörper, wie Platte, Blech oder Folie, zu schaffen, der leicht verarbeitbar und verformbar ist, der vollflächig klebend ist und sich trotz geringer Materialstärke in allen Richtungen verformen und abbiegen lässt, ohne dass dabei eine Materialausdünnung in den Biegebereichen eintritt.

Gelöst wird diese Aufgabe bei einem Formkörper, wie Platte, Blech oder Folie, mit den in dem Anspruch 1 angegebenen Merkmalen.

Danach besteht der erfindungsgemäße Formkörper aus einem metallischen Material, wie Kupfer, Zink, Aluminium, Blei, auch im Verbund miteinander oder im Verbund mit einer Kunststoffolie oder aus einem Verbundmaterial aus einem zu Folien oder dünnen Platten strang- oder walzgepresstem Bleigrundmaterial, wobei zur Verformbarkeit und Abbiegbarkeit des Formkörpers in allen Raumkoordinaten die Strukturierungen auf den beiden Seiten des Formkörpers aus Kreuzplissierungen bestehen, die durch Ausbildung von sich kreuzenden linienförmigen Einziehungen auf der einen Seite des Formkörpers und von sich kreuzenden linienförmigen Einziehungen auf der anderen Seite des Formkörpers gebildet werden, so dass Abschnitte mit Materialanhäufung und Abschnitte mit Materialverdünnung auf den beiden Oberflächen des Formkörpers erhalten werden, und wobei der ebenflächige Formkörper einseitig oder beidseitig eine auf die Formkörperfläche aufgebrachte Beschichtung aus einer Klebemasse, bevorzugterweise aus einer auf Bitumen basierenden kaltklebenden Masse aufweist, wobei die Beschichtung außenseitig mit einem abziehbaren Schutzblatt versehen ist.

Ein derart ausgebildeter Formkörper und auch bleihaltige oder nicht bleihaltige Verbundmaterialien und auch Verbundmaterial aus Kupfer und Aluminium, insbesondere Weichaluminium, sind flächenmäßig verlegbar und zur Abdichtung im Bereich von Schornsteinen, Gauben und überhaupt zur Mauerwerksabdichtung einsetzbar und aufgrund der hohen Geschmeidigkeit des Materials und insbesondere des Verbundmaterials leicht verarbeitbar. Ist die Außenseite des Formkörpers bzw. des Verbundmaterials mit einer Farbbeschichtung versehen, so ist eine Umgebungsanpassung möglich, wobei darüber hinaus auch diese Farbbeschichtung ein Korrosionsschutz bildet. Der Formkörper ist vollflächig klebend. Ein besonderer Vorteil erbringt die Ausgestaltung des Formkörpers mit einer durchgehenden Strukturierung, aufgrund der der Formkörper in allen Richtungen verformbar und verbiegbar ist. Das z.B. bei dem Verbundmaterial eingesetzte Bleigrundmaterial kann eine geringe Stärke aufweisen und aufgrund der durchgehenden Strukturierung erhält das Verbundmaterial trotz der Geschmeidigkeit zum Verformen eine hohe Eigensteifigkeit, was auch für den Einsatz anderer Materialien zutrifft. Mit der Strukturierung auf beiden Seiten des Formkörpers werden erhabene und eingezogene Abschnitte geschaffen, wobei durch die erhabenen Abschnitte der Strukturierung bei einer Verformung des Formkörpers das Material in den Biegebereichen nicht ausgedünnt wird, sondern aus dem Materialvorrat, der durch die erhaben ausgebildeten Abschnitte erhalten wird, d.h. aus den Materialanhäufungen, wird beim Verformen und Abbiegen das Material genommen, so dass auch bei einem scharfkantigen Abbiegen und bei einer Verformung des Formkörpers bzw. des Bleigrundmaterials zwischenkristalline Brüche infolge Grobkornbildung vermieden werden, so dass ein Reißen der weiteren Schichten des Verbundmaterials vermieden wird.

Weitere vorteilhafte Ausgestaltungen der Erfindung gehen aus den Unteransprüchen hervor.

Besonders vorteilhaft ist dabei die Ausgestaltung der Strukturierung auf beiden Seiten des Formkörpers. Dabei ist die Strukturierung mit ihren erhabenen und eingezogenen, d.h. vertieft ausgebildeten Abschnitten, auf beiden Seiten des Formkörpers so versetzt ausgebildet, dass den erhabenen Abschnitten der ersten Seite eingezogene Abschnitte der zweiten Seite gegenüberstehen und eingezogene Abschnitte der ersten Seite erhabene Abschnitte der anderen Seite des Formkörpers gegenüberliegen. Bevorzugterweise besteht dabei die Strukturierung des Materials aus einer Kreuzplissierung durch Ausbildung von ersten linienförmigen Vertiefungen auf der die Farbbeschichtung tragenden Seite des Materials bei gleichzeitiger Ausbildung linienförmiger Erhebungen auf der das Schutzblatt tragenden Seite des Materials und durch die ersten linienförmigen Vertiefungen kreuzenden zweiten linienförmigen Vertiefungen, wobei die zweiten linienförmigen Vertiefungen auf der das Schutzblatt tragenden Seite des Materials zu den zweiten linienförmigen Vertiefungen auf der der Farbbeschichtung tragenden Seite des Materials versetzt ausgebildet sind.

Ausführungsbeispiele der Erfindung werden nachstehend an Hand der Zeichnung näher erläutert. Es zeigen:
- Fig. 1A: in einem vergrößerten senkrechten Schnitt einen ebenflächigen Formkörper aus einem metallischen Material mit außenseitig angebrachter Farbbeschichtung und mit einer innenseitig angebrachten Beschichtung aus einer Klebemasse,
- Fig. 1B: in einem vergrößerten senkrechten Schnitt ein bleihaltiges Verbundmaterial mit außenseitig angebrachter Farbbeschichtung und mit einer innenseitig angebrachten Beschichtung aus einer Klebemasse,
- Fig. 2: eine vergrößerte Ansicht der Vorderseite einer weiteren Ausführungsform eines bleihaltigen Verbundmaterials mit einer Oberflächenstruktur,
- Fig. 3: eine vergrößerte Ansicht der Rückseite des Verbundmaterials gemäß Fig. 2,
- Fig. 4: einen senkrechten Schnitt durch ein bleihaltiges Verbundmaterial mit beidseitig auf dem bleihaltigen Grundmaterial aufplattierten aus Zinn und Blei bestehenden Plattierungsprodukten und
- Fig. 5: einen senkrechten Schnitt durch das Plattierungsprodukt.

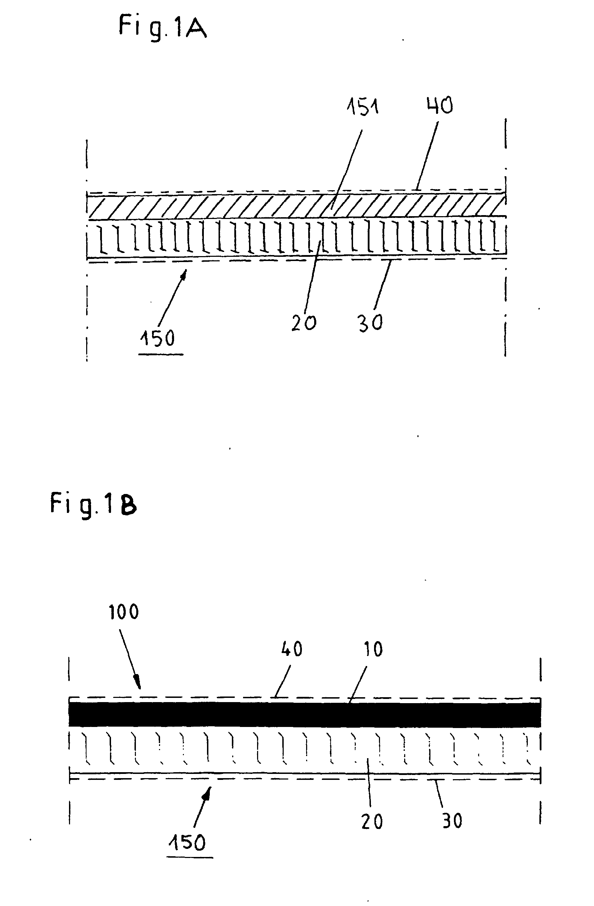

Gemäß Fig. 1A besteht ein ebenflächiger Formkörper 150 aus einem metallischen Material 151, wie Kupfer, Zink, Aluminium, Blei, auch im Verbund miteinander oder im Verbund mit einer Kunststoffolie oder aus einem nachstehend näher beschriebenen bleihaltigen Verbundmaterial 100. Besonders bevorzugt wird u.a. auch ein Verbundmaterial, welches aus Kupfer und Aluminium, insbesondere Weichaluminium besteht. Einseitig ist der Formkörper 150 mit einer auf die Formkörperfläche aufgebrachten Beschichtung 20 aus einer Klebemasse, bevorzugterweise aus einer auf Bitumen basierenden kaltklebenden Masse. Die Beschichtung 20 ist außenseitig mit einem abziehbaren Schutzblatt 30 versehen. Auf der beschichtungsfreien Seite des Formkörpers 150 ist eine Farbbeschichtung 40, bevorzugterweise eine Farblackschicht, aufgebracht. Die eingesetzte Farbe der Beschichtung 40 ist bevorzugterweise der Farbe der Umgebung angepasst, in der der Formkörper verarbeitet wird. Der Formkörper 150 ist ebenflächig ausgebildet und lässt sich großflächig verlegen, wobei besonders vorteilhaft ist, dass die zu verlegende Abschnitte des Formkörpers vollflächig klebend sind. Der Formkörper kann in Form von Platten, Blechen, Folie oder Bändern vorliegen und entsprechend verwendet werden.

Gemäß Fig. 1B besteht der Formkörper 150 aus einem bleihaltigen Verbundmaterial 100 aus einem zu Folien oder dünnen Platten strang- oder walzgepresstem Bleigrundmaterial 10, auf das einseitig ebenfalls eine Beschichtung aus einer Klebemasse, bevorzugterweise aus einer auf Bitumen basierenden kaltklebenden Masse aufgebracht ist. Diese Beschichtung 20 ist außenseitig vermittels eines abziehbaren Schutzblattes 30 abgedeckt. Auf der beschichtungsfreien Seite des Bleigrundmaterials 10 ist eine Farbbeschichtung 40 aufgebracht, die beispielsweise aus einem Farblack besteht, wobei die jeweilige Farbe der Beschichtung 40 bevorzugterweise der Farbe der Umgebung angepasst ist, in der das Verbundmaterial verarbeitet wird. Dieses Verbundmaterial 100 gemäß Fig. 1B ist ebenfalls ebenflächig ausgebildet und lässt sich großflächig verlegen, wobei besonders vorteilhaft ist, dass die zu verlegenden Abschnitte des Verbundmaterials 100 vollflächig klebend sind.

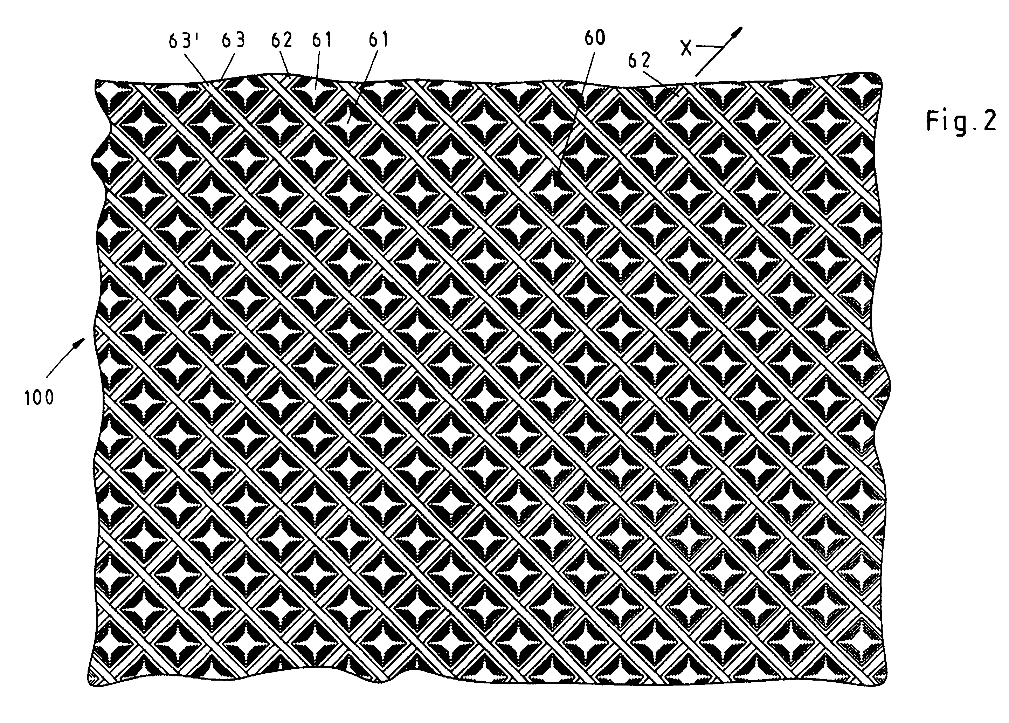

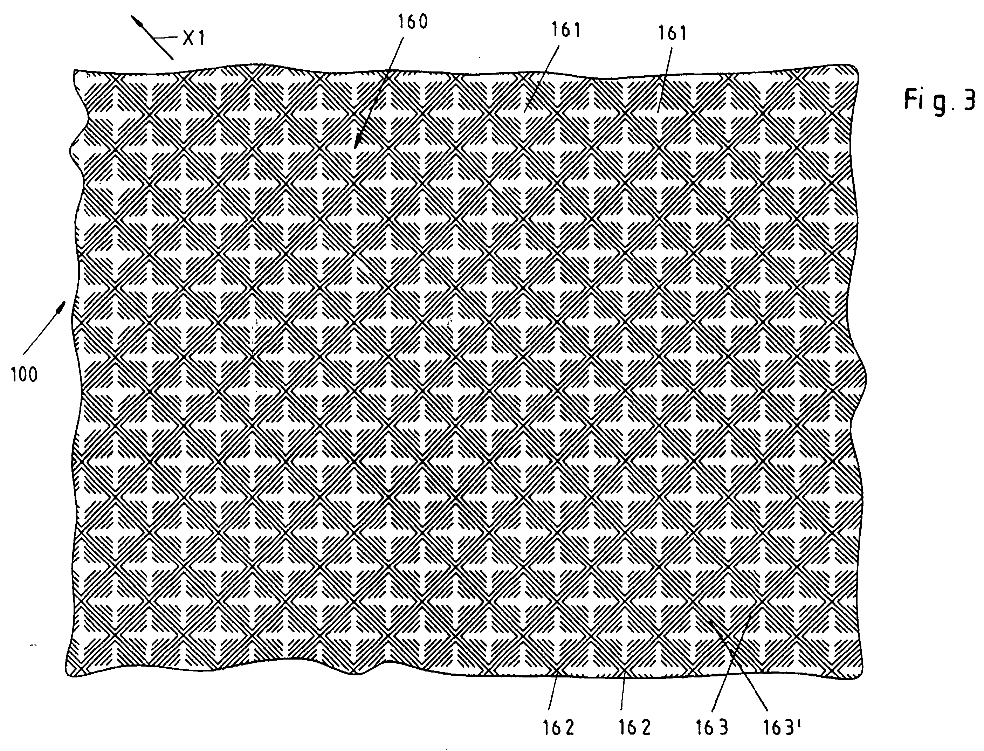

Nach einer Ausführungsform der Erfindung besteht der Formkörper 150 und/oder das Verbundmaterial 100 gemäß Fig. 2 und 3 ebenfalls aus einem zu Folien oder dünnen Platten strang- oder walzgepresstem metallischem Material oder einem Bleigrundmaterial 10, auf das einseitig eine Beschichtung 20 aus einer Klebemasse, bevorzugterweise aus einer auf Bitumen basierenden kaltklebenden Masse aufgebracht ist. Diese Beschichtung 20 ist außenseitig mit einem abziehbaren Schutzblatt 30 versehen. Auf der beschichtungsfreien Seite des Formkörpers 150 bzw. des Bleigrundmaterials 10 ist ebenfalls eine Farbbeschichtung 40 aufgebracht. Dieser Formkörper bzw. dieses Verbundmaterial gemäß Fig. 2 und 3 unterscheidet sich von dem in Fig. 1A und 1B dargestellten Formkörper 150 bzw. Verbundmaterial dadurch, dass der Formkörper 150 bzw. das Verbundmaterial 100 auf beiden Seiten mit einer durchgehenden Strukturierung 60, 160 derart versehen ist, dass das Material in allen Raumkoordinaten verformbar und abbiegbar ist. Die Strukturierung 60, 160 auf den beiden Seiten des Materials 100, 150 ist so ausgebildet, dass auf beiden Seiten erhabene Abschnitte 61, 161 und eingezogene Abschnitte 62, 162 erhalten werden.

Die Strukturierung 60, 160 mit ihren erhabenen Abschnitten 61, 161 und mit ihren eingezogenen Abschnitten 62, 162 auf den beiden Seiten des Materials ist dabei so versetzt ausgebildet, dass die jeweils erhaben ausgebildeten Abschnitte 61 bzw. 161 den jeweils eingezogenen Abschnitten 62 bzw. 162 gegenüberliegend sind. In den Fig. 2 und 3 ist die Reihe mit den erhaben ausgebildeten Abschnitten 61 auf der Vorderseite des Materials durch den Pfeil X angedeutet, während die dieser Reihe von erhabenen Abschnitten 61 zugeordnete Reihe mit den eingezogenen Abschnitte 62 der Rückseite des Materials in Fig. 3 durch den Pfeil X1 angedeutet ist. Es steht sich somit jeweils eine Reihe von erhabenen Abschnitten 61 auf der einen Seite des Materials einer Reihe von eingezogenen Abschnitte 162 der anderen Seite des Materials 100, 150 gegenüber.

Die Strukturierung 60, 160 auf den beiden Seiten des Materials 100, 150 besteht aus einer Kreuzplissierung und zwar durch Ausbildung von sich kreuzenden linienförmigen Einziehungen 63, 63' auf der die Farbbeschichtung 40 tragenden Seite des Materials 100, 150 und durch Ausbildung von sich kreuzenden linienförmigen Einziehungen 163, 163' auf der das Schutzblatt 30 tragenden Seite des Materials, wobei die sich kreuzenden linienförmigen Einziehungen 63, 63' der einen Seite des Materials zu den sich kreuzenden linienförmigen Einziehungen 163, 163' der anderen Seite des Materials 100, 150 zueinander versetzt sind, so dass zwischen je zwei linienförmigen Einziehungen die erhabenen Abschnitte 61 erhalten werden, so dass den Reihen mit den erhabenen Abschnitten 61 der einen Seite des Materials eingezogene Abschnitte 62 auf der anderen Seite des Materials gegenüberstehen. Aufgrund dieser Kreuzplissierung werden wabenartige erhabene und eingezogene Abschnitte erhalten, wobei die erhaben ausgebildeten Abschnitte Materialanhäufungen auf der einen Seite und auf der anderen Seite des Materials bilden, wobei die einzelnen Materialanhäufungen durch Abschnitte mit einer Materialverdünnung auf der einen Seite und einer auf der anderen Seite des Materials 100, 150 voneinander getrennt sind. Die Klebemasse kann vor der Ausbildung der Kreuzplissierung oder auf die fertige Kreuzplissierung aufgebracht werden.

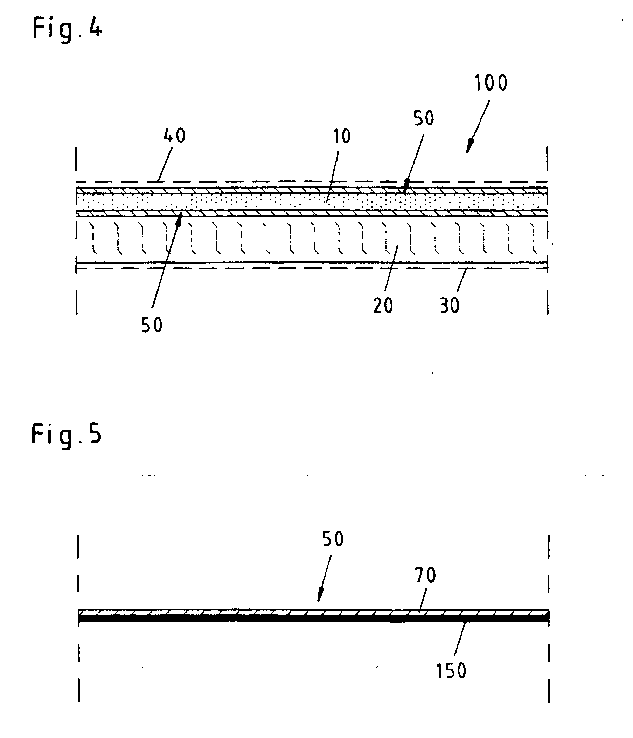

Um beim Verformen des Formkörpers 150, insbesondere des Verbundmaterials 100 ein Reißen des Bleigrundmaterials zu vermeiden, ist nach einer weiteren Ausführungsform gemäß Fig. 4 und 5 auf das Bleigrundmaterial 10 ein- oder beidseitig eine Zinnplattierungsschicht 50 aufgebracht, die aus Zinn oder einer zinnhaltigen Legierung besteht. In den Fig. 4 und 5 ist der Grundaufbau eines ein- oder beidseitig zinnplattierten bleihaltigen Grundmaterials dargestellt, bei dem ein platten- oder folienförmiges Bleigrundmaterial 10 ein- oder beidseitig mit einer Plattierungsschicht 50 verbunden ist.

Das der Plattierungsschicht 50 zugrundeliegende Plattierungsprodukt besteht aus einer Bleiplatte 150, auf die einseitig eine Beschichtung 70 aus Zinn oder einer Zinnlegierung aufplattiert ist, so dass letztlich Zinn und Blei mechanisch verschweißt sind (Fig. 5). Ein derart hergestellte Plattierungsprodukt wird auf Plattierungsstärke herabgewalzt und die so gewonnene Plattierungsschicht 50 ein- oder beidseitig auf das Bleigrundmaterial 10 so aufplattiert, dass die Bleischicht des Plattierungsproduktes auf den Bleigrundmaterial zu liegen kommt. Das Bleigrundmaterial 10, auf dass das Plattierungsprodukt bzw. die Plattierungsschicht 50 aufplattiert ist, besteht aus einer zinnhaltigen Legierung, die sich wie folgt zusammensetzt:

| | |
|---|---|
| Sn | 0,15 bis 0,85 % |
| Sb | 0,05 bis 0,15 % |
| Cu | 0,03 bis 0,06 % |
| Bi | 0,01 bis 0,10 % |
| Sonstige Beimengungen: max. | 0,10 % |
| Pb | Rest. |

Sowohl bei der Plattierungsschicht 50 als auch bei dem Bleigrundmaterial 10 handelt es sich um sehr dünne Schichten.

Ein ein- oder beidseitig mit einer Plattierungsschicht 50 versehenes Bleigrundmaterial 10 wird dann außenseitig mit der Farbbeschichtung 40 versehen, wohingegen die der Farbbeschichtung 40 abgewandte Seite des Bleigrundmaterials 10 mit der Beschichtung 20 aus einer Klebemasse, bevorzugterweise aus einer auf Bitumen basierenden kaltklebenden Masse versehen ist.

Die Prozentangaben beziehen sich auf Gewichtsprozent, bezogen auf das Gesamtgewicht.

## Patentansprüche

1. Formkörper, wie Platte, Blech oder Folie, aus einem metallischen Material, wobei der Formkörper (150) auf seinen beiden Seiten mit einer durchgehenden Strukturierung (60, 160) versehen ist, wobei zur Verformbarkeit und Abbiegbarkeit des Formkörpers (150) in allen Raumkoordinaten die Strukturierung (60, 160) auf den beiden Seiten des Formkörpers (150) aus Kreuzplissierungen bestehen, die durch Ausbildung von sich kreuzenden linienförmigen Einziehungen (63; 63') auf der einen Seite des Formkörpers und von sich kreuzenden linienförmigen Einziehungen (163, 163') auf der anderen Seite des Formkörpers gebildet werden, **dadurch gekennzeichnet,**
**dass** der ebenflächige Formkörper (150) aus einem metallischem Material (151), wie Kupfer, Zink, Aluminium, Blei, auch im Verbund miteinander oder im Verbund mit einer Kunststoffolie oder aus einem Verbundmaterial (100) aus einem zu Folien oder dünnen Platten strang- oder walzgepresstem Bleigrundmaterial (10) besteht, wobei durch die Strukturierung Abschnitte mit Materialanhäufung und Abschnitte mit Materialverdünnung auf den beiden Oberflächen des Formkörpers (150) erhalten werden, und wobei der ebenflächige Formkörper (150) einseitig oder beidseitig eine auf die Formkörperfläche aufgebrachte Beschichtung (20) aus einer Klebemasse, bevorzugterweise aus einer auf Bitumen basierenden kaltklebenden Masse aufweist, wobei die Beschichtung (20) außenseitig mit einem abziehbaren Schutzblatt (30) versehen ist.

2. Formkörper nach Anspruch 1,
**dadurch gekennzeichnet,**
**dass** die Strukturierungen (60, 160) mit ihren erhaben ausgebildeten Abschnitten (61; 161) und mit ihren eingezogenen Abschnitten (62; 162) auf beiden Seiten des Formkörpers (150) so versetzt ausgebildet sind, dass die erhabenen Abschnitte (61; 161) der jeweils einen Seite des Formkörpers den eingezogenen Abschnitten (62; 162) der jeweils anderen Seite des Formkörpers bzw. Verbundmaterials gegenüberliegen.

3. Formkörper nach Anspruch 1 oder 2,
**dadurch gekennzeichnet,**
**dass** der ebenflächige Formkörper (150) aus einem metallischem Material (151), wie Kupfer, Zink, Aluminium, Blei, auch im Verbund miteinander oder im Verbung mit einer Kunststofffolie oder aus einem Verbundmaterial (100) aus einem zu Folien oder dünnen Platten strang- oder walzgepresstem Bleigrundmaterial (10) besteht und auf einer oder beiden Seiten mit einer Farbbeschichtung (40), bevorzugterweise eine Farblackschicht, versehen ist.

4. Formkörper nach einem der Ansprüche 1 bis 3,
**dadurch gekennzeichnet,**
**dass** auf das Bleigrundmaterial (10) des Verbundmaterials (100) des Formkörpers (150) ein- oder beidseitig eine Plattierungsschicht (50) aus Zinn oder einer zinnhaltigen Legierung aufgebracht ist.

5. Formkörper nach Anspruch 4,
**dadurch gekennzeichnet,**
**dass** die zinnhaltige Legierung der Plattierungsschicht (50) des Verbundmaterials (100) aus folgender Zusammensetzung besteht:
| | |
|---|---|
| Sn | 0,15 bis 0,85 % |
| Sb | 0,05 bis 0,15 % |
| Cu | 0,03 bis 0,06 % |
| Bi | 0,01 bis 0,10 % |
| Sonstige Beimengungen: max. | 0,10 % |
| Pb | Rest. |

6. Formkörper nach einem der Ansprüche 1 bis 4,
**dadurch gekennzeichnet,**
**dass** das Bleigrundmaterial (10) des Verbundmaterials (100) des Formkörpers (150) ein- oder beidseitig mit einem Plattierungsprodukt aus einer einseitig mit einer Plattierung (70) aus Zinn oder einer Zinnlegierung versehenen mit einer auf Plattierungsstärke herabgewalzten Bleiplatte (150) versehen ist, wobei das Plattierungsprodukt mit seiner Bleiseite auf das Bleigrundmaterial (10) aufplattiert ist, das zur Verhinderung zwischenkristallinier Brüche bei einer Bleiblechverformung aus einer zinnhaltigen Legierung mit folgender Zusammensetzung besteht:
| | |
|---|---|
| Sn | 0,15 bis 0,85 % |
| Sb | 0,05 bis 0,15 % |
| Cu | 0,03 bis 0,06 % |
| Bi | 0,01 bis 0,10 % |
| Sonstige Beimengungen: max. | 0,10 % |
| Pb | Rest. |

## Claims

1. Shaped body such as plate, sheet or foil made of a metallic material, whereby the shaped body (150) is provided on its both sides with a continuous structuration (60, 160), whereby for the deformability and flexibility of the shaped body (150) in all spatial coordinates the structuration (60, 160) is made on both sides of the shaped body (150) of crossed pleatings which are formed by the formation of crossing line-shaped tapers (63 ; 63') on the one side of the shaped body and of crossing line-shaped tapers (163, 163') on the other side of the shaped body,
**characterized in**
**that** the plane shaped body (150) is made of a metalllic material (151) such as copper, zinc, aluminium, lead, also combined with each other or combined with a plastic foil or of a composite material (100) made of a lead base material (10) extruded or roll pressed to foils or thin plates, whereby due to the structuration sections with material accumulation and sections with material reduction are obtained on both surfaces of the shaped body (150) and whereby the plane shaped body (150) has on one side or on both sides a coating (20) applied on the shaped body surface made of a bonding mass, preferably of a bitumen-based cold bonding mass, whereby the coating (20) is provided on the outer side with a peelable protection foil (30).

2. Shaped body according to claim 1,
**characterized in**
**that** the structurations (60, 160) are configured with their raised configured sections (61 ; 161) and with their reduced sections (62 ; 162) on both sides of the shaped body (150) offset in such a manner that the raised sections (61 ; 161) of the respectively one side of the shaped body are opposed to the reduced sections (62 ; 162) of the respective other side of the shaped body or of the composite material.

3. Shaped body according to claim 1 or 2,
**characterized in**
**that** the plane shaped body (150) is made of a metallic material (151) such as copper, zinc, aluminium, lead, also combined with each other or combined with a plastic foil or of a composite material (100) made of a lead base material (10) extruded or roll pressed to foils or thin plates and is provided on one or on both sides with a coloured coating (40), preferably with a coloured lacquer layer.

4. Shaped body according to any of the claims 1 to 3,
**characterized in**
**that** a plating layer (50) made of tin or of a tin containing alloy is applied on one or on both sides on the lead base material (10) of the composite material (100) of the shaped body (150).

5. Shaped body according to claim 4,
**characterized in**
**that** the tin containing alloy of the plating layer (50) of the composite material (100) is made of the following composition:
Sn: 0,15 to 0,85 %
Sb: 0,05 to 0,15 %
Cu: 0,03 to 0,06 %
Bi: 0,01 to 0,10%
Other admixtures: max. 0,10 %
Pb: rest.

6. Shaped body according to any of the claims 1 to 4,
**characterized in**
**that** the lead base material (10) of the composite material (100) of the shaped body (150) is provided on one side or on both sides with a plating product made of a lead plate provided on one side with a plating (70) of tin or of a tin alloy rolled down to the plating thickness, whereby the plating product is plated with its lead side onto the lead base material (10) which is made of a tin containing alloy with the following composition to avoid intercrystalline fractures by a lead sheet deformation:
Sn: 0,15 to 0,85 %
Sb: 0,05 to 0,15 %
Cu: 0,03 to 0,06 %
Bi: 0,01 to 0,10%
Other admixtures: max. 0,10 %
Pb: rest.

## Revendications

1. Corps façonné comme plaque, tôle ou feuille en un matériau métallique, le corps façonné (150) étant pourvu sur ses deux côtés d'une structuration continue (60, 160), la structuration (60, 160) consistant, pour la déformabilité et la pliabilité du corps façonné dans toutes les coordonnées spatiales, sur les deux côtés du corps façonné (150) en plissages croisés qui sont formés par la configuration de rétrécissements en forme de lignes qui se croisent (63 ; 63') sur l'un des côtés du corps façonné et par des rétrécissements en forme de lignes qui se croisent (163, 163') de l'autre côté du corps façonné,
**caractérisé en ce**
**que** le corps façonné à surface plane est constitué par un matériau métallique (151) comme le cuivre, le zinc, l'aluminium, le plomb, également combinés l'un à l'autre ou combinés à une feuille plastique, ou en un matériau composite (100) constitué par un matériau à base de plomb (10) extrudé ou laminé en feuilles ou en plaques minces, des sections avec accumulation de matériau et des sections avec réduction de matériau étant obtenues par la structuration sur les deux surfaces du corps façonné (150) et le corps façonné à surface plane (150) présentant sur un côté ou des deux côtés une enduction appliquée sur la surface du corps façonné constituée par une masse collante, de préférence par une masse collant à froid à base de bitume, l'enduction (20) étant pourvue sur le côté extérieur d'une feuille de protection pelable (30).

2. Corps façonné selon la revendication 1,
**caractérisé en ce**
**que** les structurations (60, 160) sont configurées avec leurs sections configurées en relief (61 ; 161) et avec leurs sections rentrées (62 ; 162) en étant décalées des deux côtés du corps façonné (150) de telle manière que les sections en relief (61 ; 161) de l'un des côtés respectifs du corps façonné sont situées en face des sections rentrées (62 ; 162) de l'autre côté respectif du corps façonné ou du matériau composite.

3. Corps façonné selon la revendication 1 ou 2,
**caractérisé en ce**
**que** le corps façonné à surface plane (150) est constitué par un matériau métallique (151) comme le cuivre, le zinc, l'aluminium, le plomb, également combinés l'un à l'autre ou combinés à une feuille plastique, ou en un matériau composite (100) constitué par un matériau à base de plomb (10) extrudé ou laminé en feuilles ou en plaques minces et est pourvu sur un côté ou sur les deux côtés d'une enduction de couleur (40), de préférence d'une couche de laque de couleur.

4. Corps façonné selon l'une des revendications 1 à 3,
**caractérisé en ce**
**qu'**une couche de placage (50) en étain ou en un alliage contenant de l'étain est appliquée sur le matériau à base de plomb (10) du matériau composite (100) du corps façonné (150) sur l'un des côtés ou sur les deux côtés.

5. Corps façonné selon la revendication 4,
**caractérisé en ce**
**que** l'alliage qui contient de l'étain de la couche de placage (50) du matériau composite (100) est constitué par la composition suivante :
Sn: 0,15 à 0,85 %
Sb: 0,05 à 0,15 %
Cu : 0,03 à 0,06 %
Bi: 0,01 à 0,10 %
Autres mélanges : 0,10 % maximum
Pb : reste.

6. Corps façonné selon l'une des revendications 1 à 4,
**caractérisé en ce**
**que** le matériau à base de plomb (10) du matériau composite (100) du corps façonné (150) est pourvu sur l'un des côtés ou des deux côtés d'un produit de placage constitué par une plaque de plomb (150) pourvue d'un côté d'un placage (70) en étain ou en un alliage d'étain réduite à l'épaisseur du placage, le produit de placage étant plaqué avec son côté plomb sur le matériau à base de plomb qui, pour éviter des cassures intercristallines lors d'une déformation de la tôle de plomb, est constitué par un alliage contenant de l'étain avec la composition suivante :
Sn : 0,15 à 0,85 %
Sb: 0,05 à 0,15 %
Cu : 0,03 à 0,06 %
Bi: 0,01 à 0,10 %
Autres mélanges : 0,10 % maximum
Pb : reste.
